# EUROPÄISCHE PATENTANMELDUNG

(11) **EP 1 811 351 A1**
(43) Veröffentlichungstag der Anmeldung: **25.07.2007**
(21) Anmeldenummer: 06001340.6
(22) Anmeldetag: 23.01.2006
(51) Int. Cl.: G05B 19/05

(54) **Speicherprogrammierbare Steuerung mit USB Schnittstelle**

(71) Anmelder: SIEMENS AKTIENGESELLSCHAFT, 80333 München (DE)
(72) Erfinder: Piwinger, Boris Dr., 1070 Wien (AT)

(57) **Zusammenfassung**

Die Erfindung betrifft eine speicherprogrammierbare Steuerung (1) mit Speichermitteln (2), mit Mitteln (3) zur Bereitstellung eines virtuellen Dateisystems, welches Mittel (4) zum Zugriff auf in den Speichermitteln (2) gespeicherte Dateien aufweist, mit einer USB-Schnittstelle (5), wobei die USB-Schnittstelle (5) mit den Mitteln (3) zur Bereitstellung des virtuellen Dateisystems verbunden ist. Damit wird ein komfortabler Zugriff auf in den Speichermitteln (2) der speicherprogrammierbaren Steuerung (1) gespeicherte Dateien ermöglicht, ohne dass die Steuerung (1) einen Web Server aufweist.

## Beschreibung

Die Erfindung betrifft eine speicherprogrammierbare Steuerung mit Speichermitteln. Eine solche speicherprogrammierbare Steuerung wird beispielsweise innerhalb eines industriellen Automatisierungssystems eingesetzt.

Die EP 1 312 993 B1 beschreibt eine Automatisierungseinrichtüng, die ein Anwendungsprogramm ausführt, um eine oder mehrere Überwachungs- oder Steuerungsfunktionen in einer Automatisierungsanwendung durchzuführen, mit einem Arbeitsspeicher und einem USB-Verbinder, der über eine USB-Bus-Steuerschaltung mit einem internen Bus der Automatisierungseinrichtung verbunden ist. USB, Universal Serial Bus, ist ein Bussystem, welches insbesondere zur Verbindung eines Rechners mit externen Peripheriegeräten zum Austausch von Daten Verwendung findet.

Der Erfindung liegt die Aufgabe zugrunde, den Zugriff auf in Speichermitteln einer speicherprogrammierbaren Steuerung gespeicherte Dateien zu erleichtern.

Diese Aufgabe wird gelöst durch eine speicherprogrammierbare Steuerung mit Speichermitteln, mit Mitteln zur Bereitstellung eines virtuellen Dateisystems, welches Mittel zum Zugriff auf in den Speichermitteln gespeicherte Dateien aufweist, mit einer USB-Schnittstelle, wobei die USB-Schnittstelle mit den Mitteln zur Bereitstellung des virtuellen Dateisystems verbunden ist.

Der Erfindung liegt die Idee zugrunde, den Zugriff auf eine speicherprogrammierbare Steuerung ähnlich komfortabel wie den Zugriff auf eine externe Festplatte zu gestalten. Bisher bekannte speicherprogrammierbare Steuerungen weisen üblicherweise einen integrierten Web Server auf. Das erfordert jedoch die Konfiguration einer IP Adresse (IP = Internet Protocol) bzw. die Nutzung eines DHCP Servers (DHCP = Dynamic Host Configuration Protocol) auf der speicherprogrammierbaren Steuerung. Dieses wiederum führt zu Problemen mit Sicherheitseinstellungen eines externen Rechners, üblicherweise an einem entfernten Standort, z. B. einem Laptop, welcher für den Zugriff auf den Web Server der speicherprogrammierbaren Steuerung genutzt wird. Die hier vorgeschlagene Lösung erlaubt hingegen eine konfigurationsfreie direkte Verbindung zur speicherprogrammierbaren Steuerung über deren USB-Schnittstelle, ohne dass die Steuerung einen Web Server aufweisen müsste. Zudem ist üblicherweise der Schreib- und Lesezugriff auf Dateien, welche in Speichermitteln einer speicherprogrammierbaren Steuerung gespeichert sind, mittels eines Web Browsers mühsam. Die Erfindung erlaubt den einfachen Zugriff auf in den Speichermitteln der speicherprogrammierbaren Steuerung gespeicherten Dateien. Dabei verhält sich die über die USB-Schnittstelle, z. B. mit einem Standard-USB-Kabel, an einen externen Rechner angeschlossene speicherprogrammierbare Steuerung wie ein übliches externes Laufwerk, z. B. eine externe Festplatte. Dem Benutzer, welcher mittels des externen Rechners auf die USB-Schnittstelle der speicherprogrammierbaren Steuerung zugreift, präsentiert sich ein virtuelles Dateisystem (auch Virtual File System (VFS) genannt), welches das tatsächliche Dateisystem der speicherprogrammierbaren Steuerung enthält. Der Benutzer erhält somit mittels des virtuellen Dateisystems Zugriff auf das tatsächliche Dateisystem und kann beliebige für ihn erforderliche Dateien lesen, kopieren, schreiben, etc. Der Benutzer kann somit Standard-Hardware und -Software nutzen. Die Installierung von spezieller Software oder Betreiben zusätzlicher Programme ist nicht notwendig, allerdings auch nicht ausgeschlossen. Ein weiterer Vorteil liegt darin, dass ein direkter Zugriff auf eine einzelne speicherprogrammierbare Steuerung ermöglicht wird, ohne dass eine Netzwerkverbindung erforderlich ist.

Gemäß einer vorteilhaften Ausgestaltung der Erfindung enthält mindestens eine der Dateien Informationen zur Darstellung einer Web-Seite. Eine solche Datei kann z. B. eine so genannte HTML-Datei sein (HTML = Hypertext Markup Language). Ein Benutzer, welcher über die USB-Schnittstelle der speicherprogrammierbaren Steuerung Zugriff auf das virtuelle Dateisystem erlangt, kann somit diese Datei zur Darstellung einer Web-Seite mittels eines Standard-Web Browsers öffnen und bekommt somit die jeweilige Web-Seite in seinem Browser angezeigt. Diese Datei ist z. B. im Wurzelverzeichnis (Root Directory) des virtuellen Dateisystems gespeichert. Insbesondere wenn diese Datei mit Informationen zur Darstellung einer Web-Seite beim Zugriff auf das virtuelle Dateisystem automatisch gestartet wird, wird ein ähnliches Look and Feel beim Zugriff auf die speicherprogrammierbare Steuerung erreicht, wie bei einer speicherprogrammierbaren Steuerung, welche einen Web Server aufweist. Im Unterschied zur letzteren erfolgt gemäß dieser vorteilhaften Ausgestaltung der Erfindung die Kommunikation zwischen speicherprogrammierbarer Steuerung und dem angeschlossenen Web Server jedoch über das Standard-USB-Protokoll und nicht über das HTTP-Protokoll (HTTP = Hypertext Transfer Protocol). Ausgehend von der mindestens einen Datei, welche Informationen zur Darstellung einer Web-Seite enthält, bzw. ausgehend von dieser Web-Seite kann der Benutzer, welcher über die USB-Schnittstelle Zugriff auf das virtuelle Dateisystem erlangt, zu weiteren Web-Seiten navigieren, als ob diese Web-Seiten Standard-Web-Seiten wären, obwohl er tatsächlich lokal abgespeicherte Dateien zur Darstellung dieser Web-Seiten benutzt. Diese Dateien sind in dem virtuellen Dateisystem gespeichert. Die solchermaßen verlinkten Web-Seiten können für den Benutzer unsichtbar sein, wenn er das virtuelle Dateisystem betrachtet.

Gemäß einer weiteren vorteilhaften Ausgestaltung der Erfindung weisen die Mittel zur Bereitstellung des virtuellen Dateisystems Plug & Play-Funktionalität auf. Damit wird das virtuelle Dateisystem mittels Plug & Play-Mechanismen automatisch konfigurierbar und insbesondere bei Verwendung der Standard-Plug & Play-Funktionalität von USB wird das virtuelle Dateisystem für einen Benutzer sehr leicht zugänglich.

Gemäß einer weiteren vorteilhaften Ausgestaltung der Erfindung enthält das virtuelle Dateisystem eine Datendatei, welche beim Zugriff zum Laden von Daten aus der Steuerung vorgesehen ist. Eine solche Datendatei muss somit nicht in dem tatsächlichen Dateisystem der programmierbaren Steuerung gespeichert sein, sondern kann erst auf Anforderung in dem virtuellen Dateisystem erstellt werden und mit aktuellen Daten zur Zeit des Dateizugriffs gefüllt werden. Damit lässt sich z. B. auf elegante Art und Weise der Zugriff auf Prozessdaten des durch die speicherprogrammierbare Steuerung gesteuerten Prozesses erlangen.

Insbesondere um erhöhte Sicherheitsanforderungen zu erfüllen, wird gemäß einer weiteren vorteilhaften Ausgestaltung der Erfindung vorgeschlagen, dass mindestens eine der Dateien Zugriffsschutzmittel aufweist. Solche Zugriffsschutzmittel können beispielsweise Passwörter, benutzerabhängige Zugriffsschutzmechanismen und ähnliches sein. Somit kann, gegebenenfalls benutzerabhängig, eine solchermaßen geschützte Datei nur zum Lesen freigegeben sein. Ist eine der Dateien eine Datei mit Informationen zur Darstellung einer Web-Seite, so kann z. B. mit Hilfe dieser dargestellten Web-Seite ein Authentifizierungsvorgang durchgeführt werden. Ein mit diesem Authentifizierungsprozess authentifizierter Benutzer erhält daraufhin entsprechend seiner Benutzerrechte Zugang zu weiteren in den Speichermitteln der speicherprogrammierbaren Steuerung gespeicherten und über das virtuelle Dateisystem zugänglichen Dateien. Ein Zugriffsschutz könnte auch über einen so genannten Dongle, welcher mittels eines Kabels oder eines Verbinders an die USB-Schnittstelle angeschlossen werden kann, erfolgen. Mittels solcher Software oder Hardware realisierte Zugriffsschutzmittel können auch Aktionen eines Benutzers überwacht und aufgezeichnet werden.

Um flexibel auf Benutzeranfragen reagieren zu können, wird gemäß einer weiteren vorteilhaften Ausgestaltung der Erfindung vorgeschlagen, dass die speicherprogrammierbare Steuerung Mittel zur Erstellung von Web-Seiten auf Anforderung aufweist. Damit können Web-Seiten benutzer- bzw. anwenderspezifisch erst dann erstellt werden, wenn sie tatsächlich angefordert werden. Solche dynamischen Web-Seiten bieten vielfältige Vorteile gegenüber statischen Web-Seiten.

Gemäß einer weiteren vorteilhaften Ausgestaltung der Erfindung weist die Web-Seite Scriptingmittel oder Java Applets auf. So kann z. B. das Ausfüllen eines Formulars mittels der Web-Seite durch ein Skript in der Web-Seite durchgeführt werden. Diese Web-Seite kodiert die eingegebenen Daten in einen Dateinamen, welcher in dem Link genutzt wird, auf welchen durch den Browser zugegriffen wird. Dieser spezielle Dateiname wird durch das virtuelle Dateisystem ähnlich ausgewertet wie CGI-Parameter (CGI = Common Gateway Interface) in einer URL (URL = Uniform Resource Locator) und die Datei (eine neue Web-Seite) wird daraufhin kompiliert und über das virtuelle Dateisystem zur Darstellung in dem Browser zur Verfügung gestellt. Damit kann ein spezieller Web Server benutzt werden, welcher ein speziell angepasstes Kommunikations-Interface nutzt, welches das virtuelle Dateisystem als Kommunikationsmittel nutzt anstatt dem HTTP-Protokoll. Ebenso können die Web-Seiten Java Applets enthalten, um andere Kommunikationswege zur Steuerung über die USB-Schnittstelle zu nutzen.

Um den Upload von Dateien in die speicherprogrammierbare Steuerung zu erleichtern, wird gemäß einer weiteren vorteilhaften Ausgestaltung der Erfindung vorgeschlagen, dass Mittel zur Bereitstellung einer Drag & Drop-Funktionalität zum Upload der Dateien oder weiterer Dateien vorgesehen sind. Somit können z. B. Daten für einen Firmware Update der speicherprogrammierbaren Steuerung auf einfache Art und Weise in die speicherprogrammierbare Steuerung geladen werden. Die Drag & Drop-Funktionalität kann dabei in beide Richtungen benutzt werden. Dies bietet insbesondere Vorteile beim Transfer von einer größeren Anzahl von Dateien. Um die Sicherheit beim Upload von Dateien oder beim Zugriff auf existierende Dateien zu erhöhen, kann zuerst eine Kopie der jeweiligen neuen Version der Datei erzeugt werden, welche daraufhin auf korrekte Form und Plausibilität des Inhalts geprüft wird. Erst nach dieser Überprüfung wird die jeweilige Datei tatsächlich in der neuen Form gespeichert.

Um Kabelprobleme zu vermeiden, kann gemäß einer weiteren vorteilhaften Ausgestaltung der Erfindung die USB-Schnittstelle eine Wireless USB-Schnittstelle sein.

Zur besseren Unterstützung des jeweiligen Benutzers wird gemäß einer weiteren vorteilhaften Ausgestaltung der Erfindung vorgeschlagen, dass mindestens eine der Dateien ein ausführbares Programm ist. Ein solches ausführbares Programm wird auch executable (exe) genannt. Ein solches ausführbares Programm kann z. B. für verschiedene Betriebssysteme optimiert sein.

Um das virtuelle Dateisystem innerhalb eines Netzwerks nutzen zu können, kann das virtuelle Dateisystem gemäß einer weiteren vorteilhaften Ausgestaltung der Erfindung als Netzwerklaufwerk konfiguriert sein (z. B. NFS, SMB).

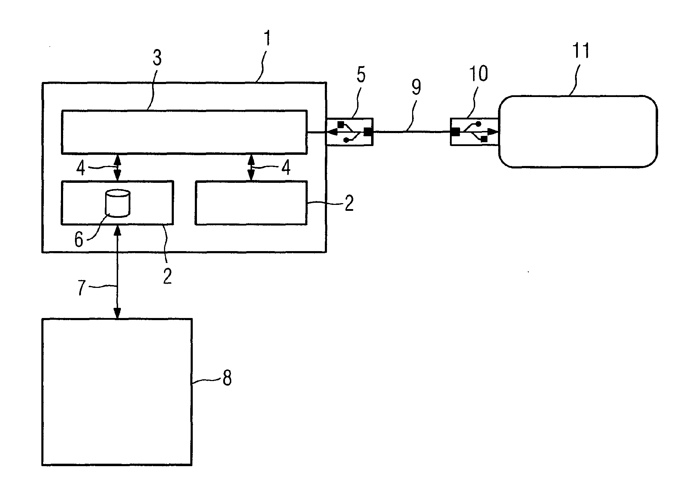

Nachfolgend wird die Erfindung anhand des in der Figur dargestellten Ausführungsbeispiels näher dargestellt und erläutert.

Die Figur zeigt eine speicherprogrammierbare Steuerung 1 mit Speichermitteln 2 und mit Mitteln 3 zur Bereitstellung eines virtuellen Dateisystems. Die Steuerung 1 weist mindestens eine USB-Schnittstelle 5 auf, welche mit den Mitteln 3 zur Bereitstellung des virtuellen Dateisystems verbunden ist. Das virtuelle Dateisystem weist Mittel 4 zum Zugriff auf in den Speichermitteln 2 gespeicherte Dateien auf. Solche Dateien können insbesondere Daten 6 enthalten, welche beim Zugriff auf die jeweilige Datei aus der Steuerung geladen werden. Diese Daten können z. B. aus einem Prozess oder einer Anlage 8 stammen, welche über eine Verbindung 7 mit der Steuerung 1 verbunden ist. Mittels einer USB-Verbindung 9, welche auch wireless, d. h. drahtlos, ausgeführt sein kann, kann ein externer Rechner 11, z. B. ein Laptop, über dessen USB-Schnittstelle 10 mit der USB-Schnittstelle 5 der speicherprogrammierbaren Steuerung 1 verbunden werden. Auf dem externen Rechner 11 ist gemäß Ausführungsbeispiel ein Web Browser installiert, welcher eine oder mehrere mittels des virtuellen Dateisystems zugreifbare Dateien, welche Informationen zur Darstellung einer Web-Seite enthalten, öffnen und lesen kann und somit die entsprechende Web-Seite darstellen kann. Der Transfer der Dateien erfolgt dabei ohne Nutzung des HTTP-Protokolls. Für den Benutzer kann jedoch der Eindruck entstehen, mittels des Web Browsers auf einen Web Server zuzugreifen. Es wird somit ein Standard Web Browser Zugriff ermöglicht, ohne dass ein Web Server erforderlich wäre.

Zusammengefasst betrifft die Erfindung somit eine speicherprogrammierbare Steuerung 1 mit Speichermitteln 2, mit Mitteln 3 zur Bereitstellung eines virtuellen Dateisystems, welches Mittel 4 zum Zugriff auf in den Speichermitteln 2 gespeicherte Dateien aufweist, mit einer USB-Schnittstelle 5, wobei die USB-Schnittstelle 5 mit den Mitteln 3 zur Bereitstellung des virtuellen Dateisystems verbunden ist. Damit wird ein komfortabler Zugriff auf in den Speichermitteln 2 der speicherprogrammierbaren Steuerung 1 gespeicherte Dateien ermöglicht, obwohl die Steuerung 1 keinen Web Server aufweist. Durch Nutzung der USB-Schnittstelle wird zudem die Kompatibilität erhöht, da Standard Hardware üblicherweise zur Kommunikation über eine USB-Schnittstelle fähig ist.

## Patentansprüche

1. Speicherprogrammierbare Steuerung (1) mit Speichermitteln (2), mit Mitteln (3) zur Bereitstellung eines virtuellen Dateisystems, welches Mittel (4) zum Zugriff auf in den Speichermitteln (2) gespeicherte Dateien aufweist, mit einer USB-Schnittstelle (5), wobei die USB-Schnittstelle (5) mit den Mitteln (3) zur Bereitstellung des virtuellen Dateisystems verbunden ist.

2. Steuerung nach Anspruch 1,
**dadurch gekennzeichnet ,**
**dass** mindestens eine der Dateien Informationen zur Darstellung einer Web-Seite enthält.

3. Steuerung nach Anspruch 1 oder 2,
**dadurch gekennzeichnet ,**
**dass** die Mittel (3) zur Bereitstellung des virtuellen Dateisystems Plug & Play Funktionalität aufweisen.

4. Steuerung nach einem der vorhergehenden Ansprüche,
**dadurch gekennzeichnet,**
**dass** das virtuelle Dateisystem eine Datendatei enthält, welche beim Zugriff zum Laden von Daten (6) aus der Steuerung (1) vorgesehen ist.

5. Steuerung nach einem der vorhergehenden Ansprüche,
**dadurch gekennzeichnet,**
**dass** mindestens eine der Dateien Zugriffsschutzmittel aufweist.

6. Steuerung nach einem der vorhergehenden Ansprüche,
**dadurch gekennzeichnet ,**
**dass** sie Mittel zur Erstellung von Web-Seiten auf Anforderung aufweist.

7. Steuerung nach einem der Ansprüche 2 bis 6,
**dadurch gekennzeichnet ,**
**dass** die Web-Seite Scriptingmittel oder Java Applets aufweist.

8. Steuerung nach einem der vorhergehenden Ansprüche,
**dadurch gekennzeichnet ,**
**dass** Mittel zur Bereitstellung einer Drag & Drop-Funktionalität zum Upload der Dateien oder weiterer Dateien vorgesehen sind.

9. Steuerung nach einem der vorhergehenden Ansprüche,
**dadurch gekennzeichnet ,**
**dass** die USB-Schnittstelle (5) eine Wireless USB-Schnittstelle ist.

10. Steuerung nach einem der vorhergehenden Ansprüche,
**dadurch gekennzeichnet ,**
**dass** mindestens eine der Dateien ein ausführbares Programm ist.

11. Steuerung nach einem der vorhergehenden Ansprüche,
**dadurch gekennzeichnet ,**
**dass** das virtuelle Dateisystem als Netzwerklaufwerk konfiguriert ist.
